(19) Europäisches Patentamt
European Patent Office
Office européen des brevets

(11) **EP 3 810 475 B1**

(12) **EUROPÄISCHE PATENTSCHRIFT**

(45) Veröffentlichungstag und Bekanntmachung des Hinweises auf die Patenterteilung:
**13.12.2023   Patentblatt 2023/50**

(21) Anmeldenummer: **19729476.2**

(22) Anmeldetag: **03.06.2019**

(51) Internationale Patentklassifikation (IPC):
**B60W 40/10** *(2012.01)*     **B60W 50/00** *(2006.01)*

(52) Gemeinsame Patentklassifikation (CPC):
**B60W 40/10;** B60W 2050/0002; B60W 2050/0028;
B60W 2300/14; B60W 2420/00; B60W 2520/22

(86) Internationale Anmeldenummer:
**PCT/EP2019/064279**

(87) Internationale Veröffentlichungsnummer:
**WO 2019/243027 (26.12.2019 Gazette 2019/52)**

(54) **VERFAHREN FÜR EIN EINE ANHÄNGERKUPPLUNG AUFWEISENDES NUTZFAHRZEUG SOWIE VORRICHTUNG UND NUTZFAHRZEUG DAFÜR UND COMPUTERPROGRAMMPRODUKT DAZU**

METHOD FOR A UTILITY VEHICLE WHICH HAS A TRAILER COUPLING, DEVICE AND UTILITY VEHICLE FOR SAID METHOD, AND COMPUTER PROGRAM PRODUCT FOR SAME

PROCÉDÉ RELATIF À UN VÉHICULE UTILITAIRE PRÉSENTANT UN ATTELAGE DE REMORQUE AINSI QUE DISPOSITIF ET VÉHICULE UTILITAIRE AFFÉRENT ET PRODUIT-PROGRAMME INFORMATIQUE AFFÉRENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2018   DE 102018114852**

(43) Veröffentlichungstag der Anmeldung:
**28.04.2021   Patentblatt 2021/17**

(73) Patentinhaber: **ZF CV Systems Europe BV**
**1170 Brussels (BE)**

(72) Erfinder:
• **PLÄHN, Klaus**
  **30926 Seelze (DE)**
• **WULF, Oliver**
  **31535 Neustadt (DE)**

(74) Vertreter: **Rabe, Dirk-Heinrich**
**ZF CV Systems Hannover GmbH**
**Am Lindener Hafen 21**
**30453 Hannover (DE)**

(56) Entgegenhaltungen:
**EP-A2- 2 479 086        EP-A2- 2 913 240**
**WO-A1-2019/083912      DE-A1-102012 018 914**

## Beschreibung

Die Erfindung betrifft den Bereich der Nutzfahrzeuge und insbesondere das Gebiet der Bestimmung eines Knickwinkels zwischen einem Nutzfahrzeug und einem von dem Nutzfahrzeug gezogenen Fahrzeuganhänger.

Im Bereich der Nutzfahrzeuge ist es bekannt, Messwerte aufzunehmen, um einen Betriebs- oder Fahrzustand des Nutzfahrzeugs selbst oder auch eines vom Nutzfahrzeug gezogenen Fahrzeuganhängers zu bestimmen. Die Messwerte über den aktuellen Betriebs- oder Fahrzustand können dann in Fahrassistenz- oder Sicherheitssystemen verwendet werden, um den Fahrzeugführer zu unterstützen, zu informieren oder bei instabilen oder unsicheren Zuständen diesen automatisch entgegenzuwirken.

Neben dem direkten Bestimmen von Messwerten mit Sensoren ist es auch bekannt, Variablen oder variable Größen indirekt mithilfe anderer gemessener Messwerte oder bekannter Größen zu schätzen oder mithilfe dieser zu modellieren. Ein Beispiel hierfür ist das Bestimmen eines Knickwinkels zwischen einem Nutzfahrzeug und einem vom den Nutzfahrzeug gezogenen Fahrzeuganhänger. Ein derartiger Knickwinkel wird beispielsweise unter Berücksichtigung einer gemessenen Geschwindigkeit, einer gemessenen Gierrate des Nutzfahrzeugs sowie fester geometrischer Parameter modelliert. Die Modellierung erfolgt in Form einer Berechnung mit an sich bekannten Formeln. Der so bestimmte Knickwinkel kann beispielsweise in Sicherheitssystemen des Fahrzeugs, wie beispielsweise einer elektronischen Stabilitätskontrolle (ESP), berücksichtigt werden.

Vorzugsweise dient die Überwachung eines Knickwinkels auch, um einen Fahrzeugführer zu warnen, wenn der Fahrzeuganhänger gegenüber dem Nutzfahrzeug, beispielsweise bei Rückwärtsfahrt durch enge Kurven, zu stark eingeknickt ist. Hierdurch kann beispielsweise ein Abreißen von Verbindungskabeln, Verbindungsleitungen oder Verbindungsschläuchen zwischen dem Nutzfahrzeug und dem Fahrzeuganhänger vermieden werden, wenn der Fahrzeugführer auf die Warnung reagiert.

In jüngster Zeit wächst auch der Wunsch, einen bekannten Knickwinkel zwischen einem Nutzfahrzeug und einem Fahrzeuganhänger zu verwenden, um ein teilweise oder vollständig autonomes Fahren des Nutzfahrzeugs, an das ein Fahrzeuganhänger angekuppelt ist, zu ermöglichen. Hierbei ist jedoch ein modellierter Knickwinkel meist nicht geeignet, um das reale Verhalten bei einer Rückwärtsfahrt abzubilden.

Selbst bei überwiegend gerader Rückwärtsfahrt des Nutzfahrzeugs begibt sich ein von dem Nutzfahrzeug dann geschobener Fahrzeuganhänger in eine immer enger werdende Kurvenfahrt. Dies geschieht unter realen Bedingungen immer, da selbst nach einer vorhergehenden geradeaus gerichteten Vorwärtsfahrt vor Beginn einer Rückwärtsfahrt bereits ein Knickwinkel vorhanden ist, der zwar sehr klein sein kann aber nie exakt Null Grad beträgt. Ein somit zunächst kleiner Knickwinkel vergrößert sich auch bei in gerader Richtung fortgesetzter Rückwärtsfahrt, ohne dass der modellierte Knickwinkel diese Vergrößerung des realen Knickwinkels widerspiegelt.

Die DE102012018914A1 offenbart eine Vorrichtung, ein Verfahren und ein Computerprogramm zur Schätzung einer Winkelabweichung zwischen einem Zugfahrzeug und einem Anhänger, wobei die Vorrichtung zur Schätzung einer Winkelabweichung eines fehlerbehafteten Knickwinkels zwischen einem Zugfahrzeug und einem mit dem Zugfahrzeug übereine Kupplung verbundenen Anhänger umfasst, sowie eine Bereitstellungseinrichtung zur Bereitstellung einer Information über eine Position der Kupplung. Die Information beinhaltet neben einer Information über den fehlerbehafteten Knickwinkel auch eine Information über eine Fahrzeugorientierung. Die Vorrichtung umfasst ferner eine Schätzeinrichtung zur Schätzung der Winkelabweichung basierend auf der Information über die Position der Kupplung, der Information über den fehlerbehafteten Knickwinkel und der Information über die Fahrzeugorientierung, wobei die Schätzeinrichtung auf einem KalmanFilter basiert, das eine Beziehung zwischen der Position der Kupplung, dem Knickwinkel und der Fahrzeugorientierung nachbildet und über das die Winkelabweichung basierend auf einem zeitlichen Verlauf der Information über die Position der Kupplung, der Information über den fehlerbehafteten Knickwinkel und der Information über die Fahrzeugorientierung schätzbar ist.

Aus dem Stand der Technik sind daher Sensoranordnungen bekannt, um neben den durch die Modellierung indirekt bestimmten absoluten Knickwinkeln auch eine direkte Knickwinkelmessung zu ermöglichen.

Derartige Messungen sind beispielsweise durch optische Verfahren realisiert, die auf Auswertung von Kamerabildern beruhen. Außerdem sind Lasersysteme bekannt, die Konturen des Fahrzeuganhängers erkennen. Diese Systeme weisen jedoch häufig eine hohe Schmutzempfindlichkeit auf und lassen nur einen sehr begrenzten Messbereich von meist weniger als 45° zu, der zudem eine Messungenauigkeit von mehr als einem Grad umfasst. Insbesondere sind optische Verfahren häufig lichtabhängig oder empfindlich. Weiter sind auch mechanische Systeme bekannt, die jedoch zu jeder Fahrt häufig aufwendig kalibriert werden müssen.

Aufgabe der vorliegenden Erfindung ist es daher, ein Verfahren und eine Vorrichtung zu finden, die den Problemen des Standes der Technik begegnet. Insbesondere soll eine Lösung gefunden werden, die es ermöglichen, einen Knickwinkel zwischen einem Nutzfahrzeug und einem von dem Nutzfahrzeug gezogenen Fahrzeuganhängers robust und besonders genau zu bestimmen. Insbesondere soll ein Knickwinkel zwischen dem Nutzfahrzeug und dem Fahrzeuganhänger auch bei Rückwärtsfahrt des Nutzfahrzeugs sicher erkannt werden.

Hierzu betrifft die Erfindung ein Verfahren für ein eine Anhängerkupplung aufweisendes Nutzfahrzeug. Das Nutzfahrzeug ist vorzugsweise eine Sattelzugmaschine. Das Verfahren dient zum Bestimmen eines Knickwinkels zwischen dem Nutzfahrzeug und einem angehängten Fahrzeuganhänger. Im Falle, dass das Nutzfahrzeug eine Sattelzugmaschine ist, ist der Fahrzeuganhänger als Sattelauflieger ausgebildet. Ein Knickwinkel beschreibt im Folgenden vorzugsweise den Winkel zwischen einer Längsachse des Nutzfahrzeugs und einer Längsachse des Fahrzeuganhängers oder zwischen einer Querachse des Nutzfahrzeugs und einer Querachse des Nutzfahrzeugs.

Das Verfahren umfasst zunächst das Bestimmen eines modellierten Werts eines Knickwinkels oder einer Knickwinkeländerung mit einem Modell. Dies erfolgt vorzugsweise in einem Schritt a). In einem Schritt b) wird dann ein gemessener Wert eines Knickwinkels oder einer Knickwinkeländerung mit einem Sensor bestimmt. Zudem wird in einem Schritt c) ein Korrekturwert aus dem gemessenen Wert abgeleitet, wobei im Schritt d) der modellierte Wert in Abhängigkeit des Korrekturwerts korrigiert wird. Im Schritt e) wird dann der korrigierte modellierte Wert als Ausgabewert eines Knickwinkels ausgeben.

Das Verfahren nutzt demnach einen gemessenen Wert, der repräsentativ für einen realen Knickwinkel oder eine Knickwinkeländerung ist, um den modellierten Wert eines Knickwinkels zu korrigieren oder anzupassen. Hierbei wird demnach ausgenutzt, dass zwar bei normalen Fahrsituationen der modellierte Wert überwiegend ausreichend gut bestimmt wird, wobei jedoch im Falle, dass dieser modellierte Wert hinreichend ungenau wird, was beispielsweise durch den gemessenen Wert bestimmbar ist, der modellierte Wert durch den gemessenen Wert korrigiert wird.

Insbesondere bei besonderen Fahrsituationen, wie beispielsweise einer Rückwärtsfahrt, ist somit ein präziser Knickwinkel zwischen Nutzfahrzeug und Fahrzeuganhänger bestimmbar.

Gemäß einer ersten Ausführungsform des Verfahrens ist der modellierte Wert, der im Schritt a) bestimmt wird, ein absoluter Wert eines Knickwinkels. Der modellierte Wert gibt also beispielsweise unmittelbar einen Wert für einen Knickwinkel in Grad an. Demgegenüber entspricht der in Schritt b) gemessene Wert einem relativen Wert eines Knickwinkels, also einen beliebigen Wert, der lediglich abhängig von dem oder stellvertretend für den vorherrschenden Knickwinkel ist.

Demnach wird ausgenutzt, dass es für die Korrektur des modellierten Werts ausreichend ist, dass lediglich eine Knickwinkeländerung, nämlich durch Betrachtung zweier aufeinander folgender relativer gemessener Werte, betrachtet wird, um diese bei der Korrektur des modellierten Werts zu berücksichtigen. Eine Ermittlung eines absoluten Werts durch die Messung ist nicht nötig, da ein absoluter Wert bereits durch die Modellierung bereitgestellt wird. Somit ist dann zum Bestimmen eines gemessenen Werts auch ein Sensor für das Verfahren einsetzbar, der lediglich relative Werte aufnimmt. Beispielsweise wird demnach ein günstiger Drehratensensor mit einem Rad einsetzbar, der beispielsweise am Nutzfahrzeug angeordnet ist und dessen Rad durch einen angehängten Fahrzeuganhänger relativ zur Kurvenfahrt gedreht wird. Es ist demnach ausreichend relative Werte des Sensors in Verbindung mit den absoluten Werten des Modells zu betrachten, sodass eine vorherige Kalibrierung des Sensors zum Bestimmen eines absoluten Werts nicht nötig ist.

Gemäß einer weiteren Ausführungsform wird in Schritt c) der Korrekturwert in Abhängigkeit des in b) bestimmten gemessen Werts und zusätzlich in Abhängigkeit eines in einem vorhergehenden Schritt e) ausgegebenen Ausgabewerts bestimmt.

Demnach erfolgt eine Korrektur des modellierten Werts anhand eines Korrekturwerts, der nicht nur den gemessenen Wert, sondern auch einen zuvor ausgegebenen Wert berücksichtigt. Hierdurch kann eine Glättung des gemessenen Werts erfolgen, sodass große Abweichungen im gemessenen Wert zum vorher korrigierten modellierten Wert, die möglicherweise durch Fehler entstanden sind, weniger stark bei der Korrektur berücksichtigt werden.

Gemäß einer weiteren Ausführungsform werden die Schritte a) bis e) iterativ ausgeführt. Die Schritte a) bis e) werden vorzugsweise mit einer vordefinierten Wiederholfrequenz iterativ ausgeführt, also wiederholt. Demnach folgt also Schritt b) auf Schritt a), Schritt c) auf Schritt b), Schritt d) auf Schritt c), Schritt e) auf Schritt d), danach wieder Schritt a) auf Schritt e) usw. Hierdurch wird kontinuierlich ein Ausgabewert, nämlich vorzugsweise mit einer Wiederholfrequenz, ausgegeben, sodass immer aktuelle Knickwinkel für die weitere Verwendung in Fahrassistenz- oder Sicherheitssystemen des Nutzfahrzeugs bereitstehen.

Gemäß einer weiteren Ausführungsform werden jedem bestimmten modellierten Wert, jedem Ausgabewert, jedem bestimmten gemessenen Wert und jedem korrigierten gemessenen Wert jeweils eine Varianz zugeordnet. Hierbei wird im Schritt a) zusätzlich eine Varianz des modellierten Werts bestimmt. Im Schritt b) wird zusätzlich eine Varianz des gemessenen Werts bestimmt. Im Schritt c) wird zusätzlich eine Varianz des Korrekturwerts bestimmt und im Schritt d) wird zusätzlich eine Varianz des Ausgabewerts bestimmt.

Durch Bestimmung der Varianz der entsprechenden Werte und vorzugsweise Beachtung dieser Varianz eines oder mehrerer Werte in einem darauffolgenden Schritt lässt sich eine Aussage über die Korrektheit des Ausgabewerts treffen. Dadurch kann ein Fahrassistenz- oder Sicherheitssystem die Varianz im Zusammenhang mit dem Ausgabewert nutzen, um die Auswirkung des als Ausgabewert ausgegebenen Knickwinkels beim Eingriff in eine Fahrt durch das entsprechende System zu berücksichtigen. Insbesondere im Falle eines unsicheren Knickwinkels, also eines Ausgabewerts mit einer vergleichsweise hohen Varianz, ist es daher möglich, diesen Knickwinkel weniger stark in einen Eingriff des Fahrassistenz- oder Sicherheitssystems zu berücksichtigen, als einen Ausgabewert, also einen Knickwinkel, mit einer vergleichsweise geringeren Varianz. So lässt sich vermeiden, dass aufgrund eines ungenau oder fehlerhaft bestimmten Knickwinkels ein fehlerhafter Eingriff des Fahrassistenz- oder Sicherheitssystems erfolgt.

Gemäß eine weitere Ausführungsform entspricht Schritt c), nämlich das Ableiten eines Korrekturwerts aus einem gemessenen Wert und vorzugsweise einem zuvor ausgegebenen Ausgabewert sowie besonders bevorzugt das Bestimmen der Varianz eines Korrekturwerts, einem Prädiktionsschritt einer Kalman-Filterung. Gemäß dieser Ausführungsform entspricht der Schritt d), nämlich das Korrigieren des modellierten Werts in Abhängigkeit des Korrekturwerts einem Korrekturschritt einer Kalman-Filterung. Die Kalman-Filterung entspricht vorzugsweise einer eindimensionalen Kalman-Filterung, also der Berechnung mit einem eindimensionalen Kalman-Filter. Ein eindimensionaler Kalman-Filter kann auch Kalman-Filter erster Ordnung genannt werden.

Im Korrekturschritt werden beispielsweise die folgenden Formeln ausgeführt:

$$\sigma^2_{neu} = \frac{1}{\frac{1}{\sigma^2_1} + \frac{1}{\sigma^2_2}}$$

$$\mu_{neu} = \frac{\sigma^2_2 \cdot \mu_1 + \sigma^2_1 \cdot \mu_2}{\sigma^2_1 + \sigma^2_2}$$

Hierbei entspricht $\sigma^2_{neu}$ der Varianz des Ausgabewerts, $\sigma^2_2$ der Varianz des modellierten Werts, $\sigma^2_1$ der Varianz des Korrekturwerts. Außerdem entspricht $\mu_{neu}$ dem Ausgabewert, $\mu_1$ dem Korrekturwert und $\mu_2$ dem modellierten Wert.

Außerdem werden im Prädiktionsschritt die folgenden Formeln ausgeführt:

$$\sigma^2_{neu} = \sigma^2_1 + \sigma^2_2$$

$$\mu_{neu} = \mu_1 + \mu_2$$

Hierbei entspricht $\sigma^2_{neu}$ der Varianz eines Erwartungswerts, die der Varianz des Korrekturwerts für den nächsten Korrekturschritt entspricht. Der Werts, $\sigma^2_1$ den nächsten Korrekturschritt entspricht. Der Werts,

entspricht der Varianz des Ausgabewerts und $\sigma^2_2$ der Varianz des gemessenen Werts. Außerdem entspricht $\mu_{neu}$ einem Erwartungswert, der dem Korrekturwert für den nächsten Korrekturschritt entspricht. $\mu_1$ entspricht dem Ausgabewert und $\mu_2$ dem gemessenen Wert.

Die Schritte Prädiktionsschritt und Korrekturschritt eines Kalman-Filters sind auf einfache Weise durch Computerprogrammcode implementierbar, so dass das Verfahren mit vergleichsweise geringem Rechenaufwand effektiv auf einem Prozessor ausführbar ist.

Gemäß einer weiteren Ausführungsform werden vor dem erstmaligen Ausführen der aufeinanderfolgenden Schritte a) bis e) zunächst die Schritte a), d) und e) ausgeführt. Das Ausführen der Schritte a), d) und e) vor einem erstmaligen Ausführen der aufeinanderfolgenden Schritte a) bis e) wird auch als Initialisierungsschritt bezeichnet. Der Korrekturwert im Initialisierungsschritt wird durch einen vordefinierten initialen Korrekturwert ersetzt und die Varianz des Korrekturwerts wird durch eine vordefinierte initiale Varianz des Korrekturwerts ersetzt. Demnach wird also zunächst vor dem erstmaligen Ausführen der aufeinanderfolgenden Schritte a) bis e) zunächst in dem Initialisierungsschritt ein modellierter Wert bestimmt, der modellierte Wert in Abhängigkeit des vordefinierten initialen Korrekturwerts und vorzugsweise in Abhängigkeit der vordefinierten initialen Varianz des Korrekturwerts korrigiert. So kann bereits der korrigierte modellierte Wert bestimmt und ausgegeben werden, ohne dass ein tatsächlich gemessener Wert vorliegt. Vorteilhafterweise wird zum Zeitpunkt des Initialisierungsschritts gleichzeitig mit der Bestimmung des modellierten Werts und seiner Varianz bereits ein gemessener Wert gemessen, der dann im darauffolgenden Durchgang der Schritte a) bis e) verwendet wird.

Durch den Initialisierungsschritt kann somit sichergestellt werden, dass ein stabiler Anfangszustand zur Ausführung des Verfahrens geschaffen wird. Insbesondere ist durch Wahl eines vordefinierten initialen Korrekturwerts sowie durch eine vordefinierte initiale Varianz des Korrekturwerts frühzeitig der Einfluss der Korrektur, nämlich schon beim ersten Iterationsschritt des Verfahrens, auf den modellierten Wert und damit den Ausgabewert wählbar.

Gemäß einer weiteren Ausführungsform wird in Schritt a) ein modellierter Wert in Abhängigkeit von mindestens einem Geschwindigkeitswert, mindestens einem Gierwinkelwert des Nutzfahrzeugs sowie wenigstens einem vorgegebenen Geometriewert des Nutzfahrzeugs und/oder des Fahrzeuganhängers bestimmt. Geometriewerte sind hierbei beispielsweise Parameter des Nutzfahrzeugs, wie der Radstand, Abstand zwischen Hinterachse des Nutzfahrzeugs und einer Anhängerkupplung oder insbesondere dem Haltebereich eines Königszapfens einer Sattelplatte. Geometriewerte für den Fahrzeuganhänger sind der Abstand zwischen dem Königszapfen und einer Mitte der Achsen im Falle mehrerer nicht mitgelenkter Achsen, oder zwischen einer Anhängerkupplung und einer gelenkten Achse sowie auch der Radstand.

Somit lässt sich in einfacher Weise ein modellierter Wert durch gewöhnliche geometrische Betrachtung in Abhängigkeit ohnehin vorhandener Sensordaten bestimmen.

Gemäß einer weiteren Ausführungsform wird im Falle einer Rückwärtsfahrt des Nutzfahrzeugs die Varianz des modellierten Werts als sehr groß, nämlich gegen Unendlich, also unendlich groß, festgelegt. Hierbei wird berücksichtigt, dass das Modell zur Bestimmung des Knickwinkels bei einer Rückwärtsfahrt nicht mehr zutreffend sein kann und somit der modellierte Knickwinkel aufgrund seiner besonders hohen angenommenen Varianz im Wesentlichen keine Berücksichtigung mehr im Korrekturschritt d) findet. So wird der aus dem gemessenen Wert abgeleitete Korrekturwert im Wesentlichen als Ausgabewert ausgegeben. Eine unmittelbare Abhängigkeit des Ausgabewerts vom gemessenen Wert kann somit ermöglicht werden, ohne grundsätzlich in den Ablauf des Verfahrens einzugreifen. Dies geschieht allein durch Verändern der Varianz des modellierten Werts.

Gemäß einer weiteren Ausführungsform werden der gemessene Wert und der modellierte Wert überwacht und im Falle eines im Wesentlichen konstanten gemessenen Werts bei einem sich ändernden modellierten Wert, während mindestens zweimaligem aufeinanderfolgenden Ausführen der Schritte a) bis e), als anhängerlose Fahrt signalisiert. Eine Überwachung des Vorhandenseins des Fahrzeuganhängers ist somit während der Fahrt möglich.

Außerdem betrifft die Erfindung eine Vorrichtung mit einem Steuergerät (ECU), nämlich insbesondere einem Fahrzeugsteuergerät (FCU) oder einem Bremssteuergerät (EBS). Das Steuergerät ist eingerichtet, das Verfahren nach einer der vorgenannten Ausführungsformen auszuführen. Außerdem umfasst das Steuergerät zumindest einen Dateneingang zum Verbinden mit einer Sensoreinheit und zum Empfangen von Sensorwerten zum Bestimmen des gemessenen Werts eines Knickwinkels oder einer Knickwinkeländerung von der Sensoreinheit. Außerdem umfasst das Steuergerät im Falle, dass es unterschiedlich zu einem Bremssteuergerät ist, wenn also das Steuergerät kein Bremssteuergerät ist, einen Dateneingang zum Verbinden mit dem Bremssteuergerät zum Empfangen von Werten zum Bestimmen des modellierten Werts eines Knickwinkels oder einer Knickwinkeländerung vom Bremssteuergerät. Die Dateneingänge können als gemeinsame Dateneingänge oder als separate Dateneingänge ausgeführt sein.

Hierbei wird ausgenutzt, dass Daten, wie Fahrzeuggeschwindigkeiten und Gierraten, ohnehin im Bremssteuergerät bereitstehen und somit in einfacher Weise zur Bestimmung des modellierten Werts herangezogen werden können.

Gemäß einer weiteren Ausführungsform umfasst die Vorrichtung die Sensoreinheit, wobei die Sensoreinheit eingerichtet ist, einen relativen Knickwinkel zwischen dem Nutzfahrzeug und dem Fahrzeuganhänger zu detektieren.

Eine Knickwinkeländerung kann somit in einfacher Weise durch zwei aufeinanderfolgend gemessene relative Knickwinkel bestimmt und dem Steuergerät für die weitere Berechnung des Ausgabewerts zur Verfügung gestellt werden.

Gemäß einer weiteren Ausführungsform der Vorrichtung umfasst das Steuergerät einen Modellbildner und einen Funktionsblock. Der Modellbildner ist eingerichtet, einen modellierten Wert eines Knickwinkels zu bestimmen. Der Funktionsblock ist eingerichtet den modellierte Wert in Abhängigkeit von Sensordaten des Sensors, die einen gemessenen Werte umfassen, zu korrigieren und den korrigierten modellierten Wert als Signal auszugeben.

Außerdem weist die Sensoreinheit gemäß einem Ausführungsbeispiel ein um eine Achse rotierbares Rad auf, das mit einer Halterung am Nutzfahrzeug anbringbar ist. Die Halterung ist eingerichtet, eine umlaufende Kontaktfläche des Rades mit dem Fahrzeuganhänger in Kontakt zu bringen. Somit ist die Sensoreinheit kostengünstig in einfacher Art und Weise realisierbar.

Außerdem betrifft die Erfindung ein Nutzfahrzeug mit einer Vorrichtung nach einer der vorgenannten Ausführungsformen und ein Computerprogrammprodukt zum Ausführen des Verfahrens nach einer der vorgenannten Ausführungsformen, wenn es auf einem Steuergerät einer Vorrichtung nach einer der vorgenannten Ausführungsformen ausgeführt wird.

Weitere Ausführungsformen ergeben sich anhand der in den Figuren näher erläuterten Ausführungsbeispielen. Hierbei zeigen:

Fig. 1      Ein Nutzfahrzeug mit einem Fahrzeuganhänger,

Fig. 2      einen Sattelzug mit einem Sattelauflieger,

Fig. 3      eine Ansicht einer Sattelkupplung mit einer Sensoreinheit,

Fig.4      ein Blockschaltbild des Verfahrens,

Fig. 5      ein Ausführungsbeispiel der Vorrichtung,

Fig. 6      Schritte des Verfahrens,

Fig. 7      Schritte des Korrekturschritts,

Fig. 8      Schritte des Prädiktionsschritts,

Fig. 9 - 12      Darstellungen der bestimmten, abgeleiteten oder korrigierten Werte des Verfahrens.

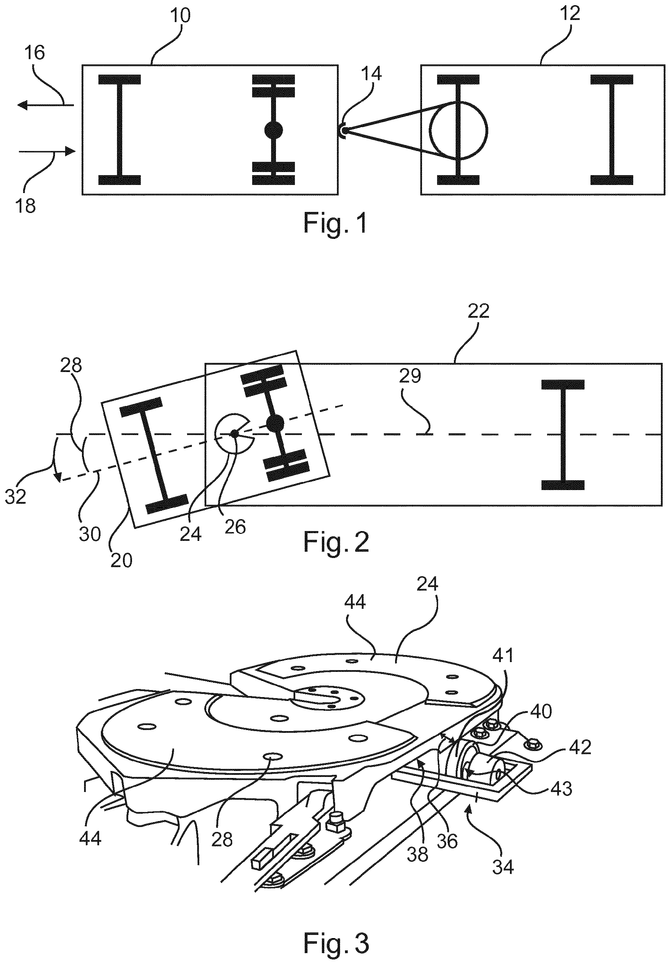

Fig. 1 zeigt ein Nutzfahrzeug 10, das mit einem Fahrzeuganhänger 12 über eine Anhängerkupplung 14 verbunden ist. Das Nutzfahrzeug 10 weist einen nicht dargestellten Antrieb auf, mit dem das Nutzfahrzeug 10 antreibbar ist und den daran angekuppelten Fahrzeuganhänger 12 bei einer Vorwärtsfahrt 16 zieht oder bei einer Rückwärtsfahrt 18 schiebt.

Fig. 2 zeigt ebenfalls ein Nutzfahrzeug 10, das hier jedoch als Sattelzugmaschine 20 ausgebildet ist. Die Sattelzugmaschine 20 zieht ebenfalls einen Fahrzeuganhänger 12, der hier jedoch als Sattelauflieger 22 ausgebildet ist. Der Sattelauflieger 22 ist mit der Sattelzugmaschine 20 ebenfalls über eine Anhängerkupplung 14 gekuppelt, die in Fig. 2 jedoch als Sattelkupplung 24 ausgebildet ist. Die Sattelkupplung 24 ist an der Sattelzugmaschine 20 angeordnet und hält einen Königszapfen 26 des Sattelaufliegers 22, sodass die Sattelzugmaschine 20 mittels der Sattelkupplung 24 und dem darin eingekuppelten Königszapfen 26 den Sattelauflieger 22 bei einer Vorwärtsfahrt 16 ziehen und bei einer Rückwärtsfahrt 18 schieben kann.

Zwischen der Sattelzugmaschine 20 und dem Sattelauflieger 22 besteht hier ein Knickwinkel 28 von exemplarisch etwa 20 Grad, der sich beispielsweise bei einer Linkskurvenfahrt der Sattelzugmaschine einstellt. Der Knickwinkel 28 ist als Winkel zwischen den Längsachsen eines Nutzfahrzeugs 10 und einem Fahrzeuganhänger definiert. Demnach entspricht der Knickwinkel 28 hier dem Winkel zwischen einer Längsachse 29 des Sattelaufliegers 22 und einer Längsachse 30 der Sattelzugmaschine. Die Längsachsen 29, 30 liegen demnach bei einer geradeaus gerichteten Vorwärtsfahrt 16 aufeinander, sodass sich ein Knickwinkel von Null oder im Wesentlichen Null Grad einstellt. Begibt sich die Sattelzugmaschine 20 dann auf eine Vorwärtsfahrt 16 in einer Linkskurve, wie hier dargestellt, so ändert sich der Knickwinkel von Null Grad um eine Knickwinkeländerung 32 auf den hier dargestellten Knickwinkel 28. Der Knickwinkel 28 oder die Knickwinkeländerung 32 sollen gemäß der Erfindung möglichst genau bestimmt werden.

Fig. 3 eine perspektivische Ansicht der Sattelkupplung 24 mit einer Sensoreinheit 34, die im Abstand 36 auf einer Vorderseite 38 der Sattelkupplung 24 angeordnet ist. Die Sensoreinheit 34 umfasste ein Rad 40, das mit einem Drehratensensor 42 über eine Achse 43 verbunden ist. Wenn ein Sattelauflieger 22 mit dem Königszapfen 26 in der Sattelkupplung 24 gehalten wird, liegt der Sattelauflieger 22 auf Reibbelägen 44 der Sattelkupplung auf. Durch Drehung des Sattelaufliegers 22 auf der Sattelkupplung 24 wird das Rad 40 um die Achse 43 bewegt, sodass diese Bewegung detektierbar und als Knickwinkeländerung 32 interpretiert werden kann.

Zum Herstellen des Kontakts zwischen dem Sattelauflieger 22 und der Sensoreinheit 34 weist das Rad 40 eine Kontaktfläche 41 auf, die auf der Unterseite des Sattelaufliegers 22 gegen den Sattelauflieger 22 gedrückt wird.

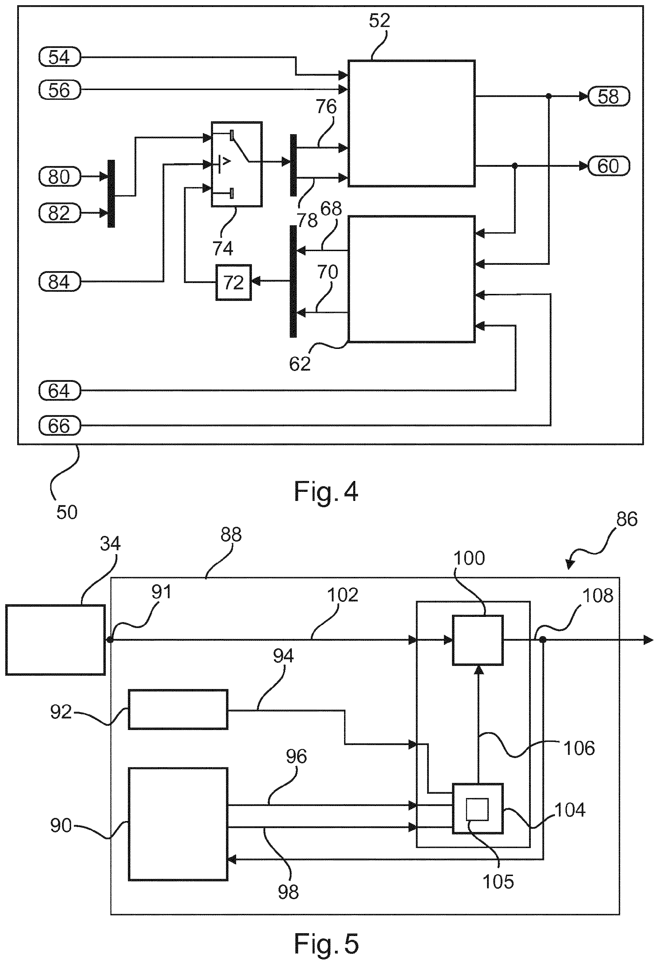

Fig. 4 zeigt ein Ausführungsbeispiel der Erfindung, nämlich als Blockschaltbild des Verfahrens 50. Als Eingangsgröße wird ein modellierter Wert 54 eines Knickwinkels 28 sowie eine Varianz 56 des modellierten Werts 54 bestimmt. Diese werden einem Korrekturschritt 52 zugeführt. Außerdem werden dem Korrekturschritt 52 ein Korrekturwert 76 und eine Varianz 78 des Korrekturwerts 76 zugeführt. Wird der Korrekturschritt 52 das erste Mal ausgeführt, so entspricht der Korrekturwert 76 einem initialen Korrekturwert 80, der vordefiniert ist, und die Varianz 78 des Korrekturwerts 76 entspricht einer initialen Varianz 82 des initialen Korrekturwerts 80, die ebenfalls vorbestimmt ist.

Ein Entscheider 74, der beispielsweise als Multiplexer ausgebildet ist, ordnet den initialen Korrekturwert 80 und die initiale Varianz 82 dem Korrekturwert 76 und der Varianz 78 des Korrekturwerts 76 für den Korrekturschritt 52 zu.

Im Korrekturschritt 52 wird ein korrigierter modellierter Wert 58 als Ausgabewert 58 und eine Varianz 60 des korrigierten modellierten Werts 58 als Varianz 60 des Ausgabewerts 58 ausgegeben. Der Ausgabewert 58 wird berechnet, indem zunächst der modellierte Wert 54 mit der Varianz 78 des Korrekturwerts 76 multipliziert wird und außerdem der Korrekturwert 76 mit der Varianz 56 des modellierten Werts 54 multipliziert wird. Die Produkte werden addiert und durch die Summe aus der Varianz 56 des modellierten Werts 54 und der Varianz 78 des Korrekturwerts 76 dividiert.

Die Varianz 60 des Ausgabewerts 58 wird bestimmt, indem die Kehrwerte der Varianz 56 des modellierten Werts 54 und der Varianz 78 des Korrekturwerts 76 addiert und der Kehrwert der Summe bestimmt wird. Der Ausgabewert 58 und die Varianz des Ausgabewerts 60 werden dann einem Prädiktionsschritt 62 zugeführt, wobei dem Prädiktionsschritt 62 zusätzlich ein gemessener Wert 64 und eine Varianz 66 des gemessenen Werts 64 zugeführt wird.

Im Prädiktionsschritt 62 wird dann ein Erwartungswert 68 sowie eine Varianz 70 des Erwartungswertes 68 bestimmt. Der Erwartungswert 68 entspricht einer Summe des Ausgabewerts 58 und des gemessenen Werts 64, während die Varianz 70 des Erwartungswerts 68 der Summe der Varianz 60 des Ausgabewerts 58, sowie der Varianz 66 des gemessenen Werts 64 entspricht. Der Erwartungswert 68 und die Varianz 70 des Erwartungswerts 68 werden in einem Verzögerungsglied 72 für einen Taktzyklus zwischengespeichert und dann über den Entscheider 74 dem Korrekturschritt 52 zugeführt. Hierbei wird der Erwartungswert 68 als Korrekturwert 76 und die Varianz 70 des Erwartungswerts 68 als Varianz 78 des Korrekturwerts 76 dem Korrekturschritt 52 zugeführt.

Demnach werden also der Korrekturschritt 52 und der Prädiktionsschritt 62 zum Beispiel mit einer vorbestimmten Wiederholrate abwechselnd ausgeführt. Mit derselben Wiederholrate wird vorzugsweise auch der modellierte Wert 54 und seine Varianz 56, sowie der gemessene Wert 64 mit seiner Varianz 66 bestimmt. Hierbei ist durch das Verzögerungsglied 72 sichergestellt, dass ein aktueller modellierter Wert 54 mit seiner Varianz 56 mit dem aus dem vorherigen Durchgang bestimmten gemessenen Wert 64 mit seiner Varianz 66 im Korrekturschritt bearbeitet wird.

Fig. 5 zeigt ein Ausführungsbeispiel der erfindungsgemäßen Vorrichtung 86. Die Vorrichtung 86 umfasst ein Steuergerät 88, das vorzugsweise ein Bremssteuergerät 88 ist. Das Steuergerät 88 weist außerdem eine elektronische Stabilitätskontrolle 90 auf. Der elektronische Stabilitätskontrolle 90 werden regelmäßig Geschwindigkeiten und Gierraten des Nutzfahrzeugs, vorzugsweise über ein CAN-Bus, der nicht dargestellt ist, zugeführt. Außerdem ist ein Speicher 92 vorhanden, in dem Geometriedaten des Nutzfahrzeugs 10 und/oder des Fahrzeuganhängers 12 gespeichert oder speicherbar sind. Die Geometriedaten 94, die Geschwindigkeitswerte 96 und die Gierraten 98 werden einem Modellbildner 104 zugeführt. Der Modellbildner 104 umfasst ein Modell 105 zum Bestimmen eines modellierten Werts 54 eines Knickwinkels, basierend auf der Geschwindigkeit 96 den Gierraten 98 und den Geometriedaten 94.

Der modellierte Wert 54 eines Knickwinkels 28 sowie einer Varianz 56 des modellierten Werts 54 werden als Daten 106 ausgegeben. Diese Daten 106 werden einem Funktionsblock 100 zugeführt, wobei dem Funktionsblock 100 außerdem Sensordaten 102 des Sensoreinheit 34 zugeführt werden. Im Funktionsblock 100 wird dann das zuvor in Fig. 4 beschriebene Verfahren ausgeführt. Außerdem wird ein Signal 108 ausgegeben, das beispielsweise den Ausgabewert 58 und dessen Varianz 60, wie in Fig. 4 beschrieben, beinhaltet. Das Signal 108 wird ebenfalls der elektronischen Stabilitätskontrolle 90 zugeführt, um dieses bei Eingriffen in eine Fahrzeugsteuerung durch die elektronische Stabilitätskontrolle 90 zu berücksichtigen.

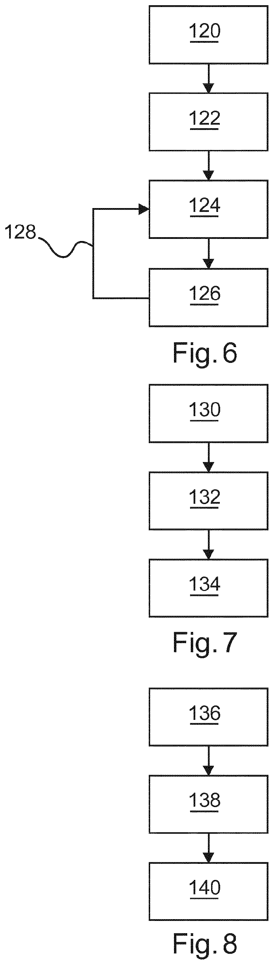

Fig. 6 zeigt ausgewählte Schritte eines Ausführungsbeispiels des Verfahrens 50, die beispielsweise mit der Vorrichtung 86 ausgeführt werden. Im Schritt 120 befindet sich das Verfahren in einem Reset-Zustand, in dem keine Werte ausgegeben werden. Danach wechselt das Verfahren in einen Initialisierungsschritt 122. Hierbei werden der Korrekturwert 76 und die Varianz 78 des Korrekturwerts 76 initialisiert. Darauf folgt ein Korrekturschritt 124, auf den wiederum ein Prädiktionsschritt 126 folgt. Korrekturschritt 124 und Prädiktionsschritt 126 sind vorzugsweise die Schritte eines Kalman-Filters. Nach dem Prädiktionsschritt 126 erfolgt ein erneuter Korrekturschritt 124, wie durch den Pfeil 128 dargestellt ist. Die Schritte 124 und 126 wechseln sich somit ab, bis ein nicht dargestelltes Reset-Signal empfangen wird, wodurch - wie ebenfalls nicht weiter dargestellt ist - das Verfahren wieder in den Schritt 120 übergeht.

Fig. 7 zeigt den Korrekturschritt 124 in detaillierteren Schritten 130 bis 134. Im Schritt 130 wird ein modellierter Wert 54, eine Varianz 56 des modellierten Werts 54, ein Korrekturwert 76 und eine Varianz 78 des Korrekturwerts 76 empfangen. In einem Schritt 132 wird dann der modellierte Wert 54 in Abhängigkeit der Varianzen 56, 78 und des Korrekturwerts 76 korrigiert. Im Schritt 134 wird der korrigierte modellierte Wert 58 als Ausgabewert 58 ausgegeben.

Fig. 8 zeigt detailliertere Schritte des Prädiktionsschritts 126. Im Schritt 136 werden der Ausgabewert 58 und eine Varianz 60 des Ausgabewerts 58, sowie ein gemessener Wert 64 und dessen Varianz 66 empfangen. Hieraus wird in einem Schritt 138 ein Erwartungswert 68 und eine Varianz 70 des Erwartungswerts 68 bestimmt. Diese werden im Schritt 140 ausgegeben.

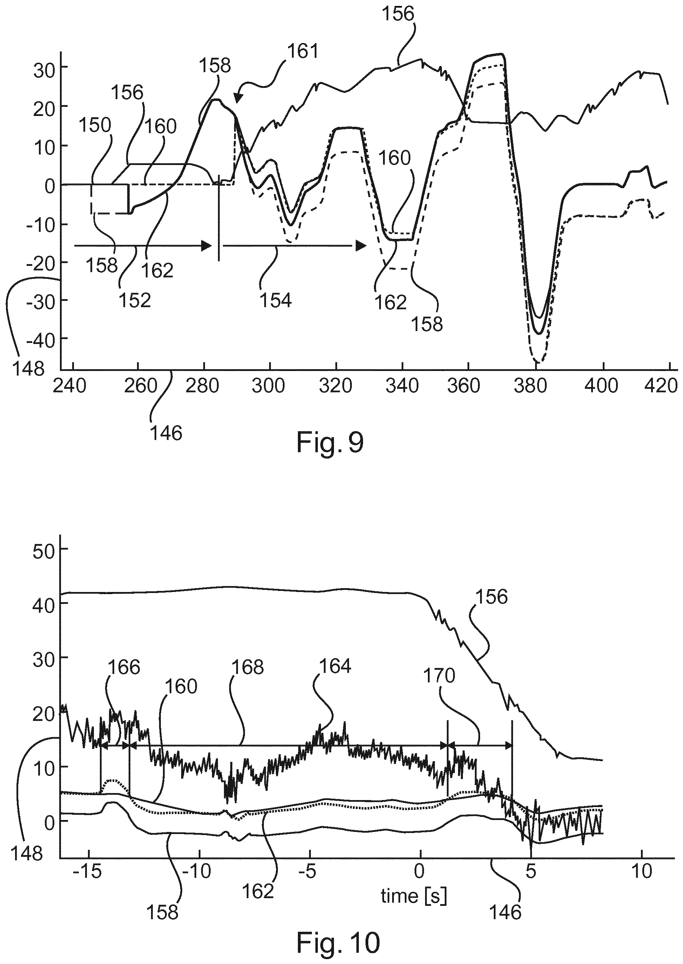

Fig. 9 zeigt eine Zeitachse 146, über die verschiedene Werte von Knickwinkeln 148 zwischen einem Nutzfahrzeug 10 und einem Fahrzeuganhänger 12 dargestellt sind. Hierbei ist im Bereich 152 eine Rückwärtsfahrt 18 und beginnend im Bereich 154 bis zum Ende der Zeitachse eine Vorwärtsfahrt 16 dargestellt. Zu einem Zeitpunkt 150 findet eine Kupplung des Fahrzeuganhängers 12 mit dem Nutzfahrzeug statt, wodurch der durch die strichlierte Linie 158 dargestellt gemessene Wert 54 sich verändert, da ein Rad einer Sensoreinheit 34 leicht verdreht wird.

Die Kurve 156 zeigt die Geschwindigkeit des Nutzfahrzeugs 10 an. Diese steigt nun leicht an d. h., das Fahrzeug wird in Rückwärtsrichtung beschleunigt. Durch die Kurve 160 wird ein modellierter Wert 54 dargestellt. Man sieht, dass dieser zunächst gerade verläuft, also augenscheinlich der modellierte Wert 54 eine geradeaus gerichtete Rückwärtsfahrt 18 anzeigt. Dies entspricht jedoch nicht dem realen Verhalten. Dem wird Sorge getragen, indem gemäß dem Verfahren 50 die Varianz 56 des modellierten Werts 56 bei der Rückwärtsfahrt 18 gegen Unendlich gesetzt wird, sodass ein Ausgabewert 58 resultiert, der durch die Linie 160 dargestellt ist. Der Ausgabewert 58 entspricht der Berechnung durch das Kalman-Filter und einer Kalman-Filterung, in den nur der durch die Kurve 158 dargestellte gemessene Wert 64 mit einer geringeren Varianz 66 einfließt. Sobald nun die Rückwärtsfahrt 18 beendet und als Vorwärtsfahrt 16 fortgesetzt wird, steigt der modellierte Wert 54, der durch die Kurve 160 dargestellt ist, an, bis in einem Punkt 161 sich modellierter Wert 54, gemessener Wert 64 und Ausgabewert 58 nahezu angenähert haben.

Fig. 10 zeigt wiederum eine Zeitachse 146, über der Knickwinkel 148 aufgetragen sind. Die Kurve 156 entspricht erneut einer Geschwindigkeit des Nutzfahrzeugs 10. Die Linie 158 entspricht dem gemessenen Wert 64, die strichlierte Linie 162 dem Ausgabewert 58, die Kurve 160 dem modellierten Wert 54. Hier wird das Verfahren als Indikator für einen niedrigen Reibwert bei Kurvenfahrt verwendet. Bei Kurvenfahrt auf niedrigem Reibwert vergrößert sich der gemessene Wert 64 deutlich gegenüber dem modellierten Wert 54. Dies geschieht auch bei unkritischen Fahrzuständen bei Querbeschleunigungen. Dies ist auf die Vergrößerung des Schräglaufwinkels am Anhänger in Folge des niedrigen Reibwerts der Straße zurückzuführen. Hier ist beispielsweise bei T = - 13, also im Bereich 166, ein Wechsel von nassem Asphalt auf nassen Blaubasalt dargestellt. Dies erfolgt bei einer Geschwindigkeit von ca. 40 km/h mit einer Querbeschleunigung von 1 bis ca. 2 m pro Quadratsekunde, die Querbeschleunigung ist durch die Kurve 164 dargestellt. Es ist deutlich zu sehen, dass der Ausgabewert 58, der durch die Kurve 162 dargestellt ist, zu dem modellierten Wert 54, der durch die Kurve 160 dargestellt ist, einen Offset aufweist, sobald sich der Fahrzeuganhänger 12 auf dem nassen Blaubasalt befindet. Dies ist ein deutlicher Indikator für eine unangemessene Geschwindigkeit, sodass ein elektronisches Bremssystem oder eine elektronische Stabilitätskontrolle hier eine Warnlampe einschalten kann, um den Fahrer darauf hinzuweisen, oder gar die Geschwindigkeit durch eine Motormomentenreduzierung zu verringern.

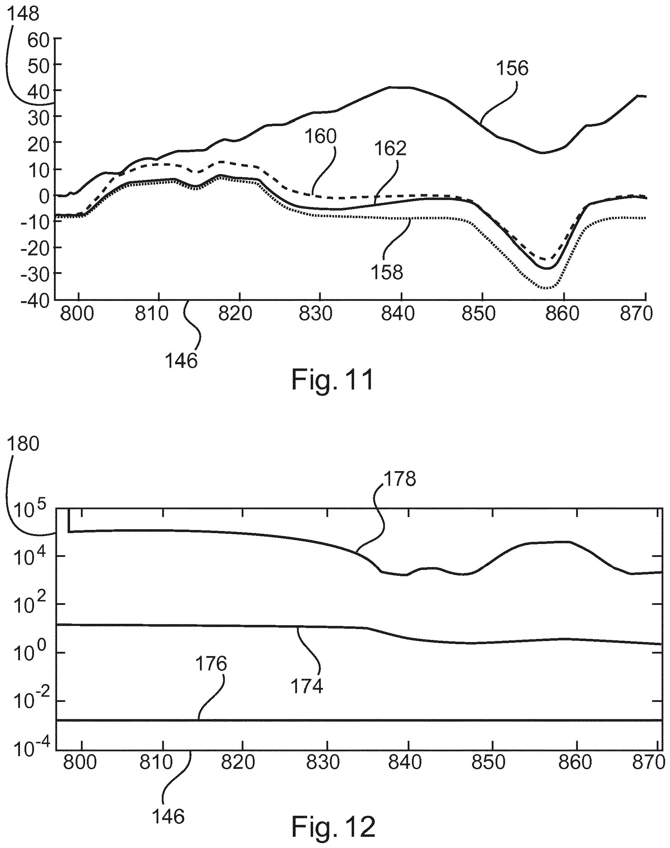

Fig. 11 zeigt eine Darstellung eines Abgleichs, wie er mit dem Verfahren direkt nach dem Anfahren erfolgt. Hierzu ist wieder über die Achse 146 die Zeit in Sekunden aufgetragen und auf der Achse 148 die hieraus resultierenden Knickwinkel. Bei der Zeit t = 800 Sekunden erfolgt eine Anfahrt. Hierbei zeigt die Kurve 160 den modellierten Wert 54, die Kurve 162 den Ausgabewert 58 und die Kurve 158 den gemessenen Wert 64 an. Die Kurve 156 zeigt die Geschwindigkeit. Trotz einer Kurvenfahrt nähert sich der Ausgabewert 58 gemäß der Kurve 162 schnell an den modellierten Wert 54 gemäß der Kurve 160 an. Mit zunehmender Fahrtstrecke nimmt die Varianz 56 des modellierten Werts 54 ab, wobei der gemessene Wert 64 immer konstant ist. Bei großen Knickwinkeln nimmt die Varianz 56 des modellierten Werts 54 wieder zu, aufgrund von Modellfehlern. Dies führt dazu, dass auch der Ausgabewert 58 in Richtung gemessener Wert 64 abweicht (siehe beispielsweise bei T = 858 Sekunden).

Die entsprechenden Varianzen sind hierzu in Fig. 12 dargestellt, wobei in Fig. 12 auf der Zeitachse 146 die gleichen Zeitpunkte wie in Fig. 11 dargestellt sind und die Varianz über der Achse 180 aufgetragen sind. Hierbei zeigt dann die Kurve 176 die Varianz 66 des gemessenen Werts 64, die Kurve 174 die Varianz 60 des Ausgabewerts 58 und die Kurve 178 die Varianz 56 des modellierten Werts 54.

Bezugszeichenliste (Bestandteil der Beschreibung)

| | |
|---|---|
| 10 | Nutzfahrzeug |
| 12 | Fahrzeuganhänger |
| 14 | Anhängerkupplung |
| 16 | Vorwärtsfahrt |
| 18 | Rückwärtsfahrt |
| 20 | Sattelzugmaschine |
| 22 | Sattelauflieger |
| 24 | Sattelkupplung |
| 26 | Königszapfen |
| 28 | Knickwinkel |
| 29 | Längsachse des Sattelaufliegers |

| | |
|---|---|
| 30 | Längsachse der Sattelzugmaschine |
| 32 | Knickwinkeländerung |
| 34 | Sensoreinheit |
| 36 | Abstand |
| 38 | Vorderseite |
| 40 | Rad |
| 41 | Kontaktfläche |
| 42 | Drehratensensor |
| 43 | Achse |
| 44 | Reibbeläge |
| 50 | Verfahren |
| 52 | Korrekturschritt |
| 54 | modellierter Wert |
| 56 | Varianz des modellierten Werts |
| 58 | korrigierter modellierter Wert/Ausgabewert |
| 60 | Varianz des korrigierten modellierten Werts/Varianz des Ausgabewerts |
| 62 | Prädiktionsschritt |
| 64 | gemessener Wert |
| 66 | Varianz des gemessenen Werts |
| 68 | Erwartungswert |
| 70 | Varianz des Erwartungswerts |
| 72 | Verzögerungsglied |
| 74 | Entscheider |
| 76 | Korrekturwert |
| 78 | Varianz des Korrekturwerts |
| 80 | Initialer Korrekturwert |
| 82 | Varianz des initialen Korrekturwerts |
| 86 | Vorrichtung |
| 88 | Steuergerät |
| 90 | elektronische Stabilitätskontrolle |
| 92 | Speicher |
| 94 | Geometriedaten |
| 96 | Geschwindigkeit |
| 98 | Gierrate |
| 100 | Funktionsblock |
| 102 | Sensordaten |
| 104 | Modellbildner |
| 105 | Modell |
| 106 | Daten |
| 108 | Signal |
| 120 - 126 | Schritte des Verfahrens |
| 130 - 134 | Schritte des Korrekturschritts |
| 136 - 140 | Schritte des Prädiktionsschritts |
| 146 | Zeitachse |
| 148 | Knickwinkel |
| 150 | Zeitpunkt |
| 152 | Bereich einer Rückwärtsfahrt |
| 154 | Bereich einer Vorwärtsfahrt |
| 156 | Geschwindigkeit |
| 158 | Linie (gemessener Wert 64) |
| 160 | Linie (modellierter Wert 54) |
| 162 | Linie (Ausgabewert 58) |
| 164 | Querbeschleunigung |
| 166 | Erster Bereich |
| 168 | Zweiter Bereich |
| 170 | Dritter Bereich |
| 174 | Linie (Varianz 60 des Ausgabewerts 58) |

176     Linie (Varianz 66 des gemessenen Werts 64)
178     Linie (Varianz 56 des modellierten Werts)
180     Varianz

**Patentansprüche**

1. Verfahren für ein eine Anhängerkupplung (14) aufweisendes Nutzfahrzeug (10), zum Bestimmen eines Knickwinkels (28) zwischen dem Nutzfahrzeug (10) und einem angehängten Fahrzeuganhänger (12), umfassend die Schritte:

   a) Bestimmen eines modellierten Werts (54) eines Knickwinkels (28) oder eine Knickwinkeländerung (32) mit einem Modell (105),
   b) Bestimmen eines gemessenen Werts (64) eines Knickwinkels (28) oder einer Knickwinkeländerung (32) mit einer Sensoreinheit (34),
   c) Ableiten eines Korrekturwerts (76) aus dem gemessenen Wert (64),
   d) Korrigieren des modellierten Werts (54) in Abhängigkeit des Korrekturwerts (76)
   e) Ausgeben des korrigierten modellierten Werts (58) als Ausgabewert (58) eines Knickwinkels (28) oder einer Knickwinkeländerung (32).

2. Verfahren nach Anspruch 1, wobei im Schritt a) der modellierte Wert (54) einem absoluten Knickwinkel (28) entspricht und im Schritt b) der gemessene Wert einem relativen Knickwinkel (28) entspricht.

3. Verfahren nach Anspruch 1 oder 2, wobei in Schritt c) der Korrekturwert (76) in Abhängigkeit des gemessenen Werts (64) und in Abhängigkeit eines in einem vorhergehenden Schritt e) ausgegebenen Ausgabewerts (58) bestimmt wird.

4. Verfahren nach einem der vorhergehenden Ansprüche, wobei die Schritte a) bis e) iterativ ausgeführt werden.

5. Verfahren nach einem der vorhergehenden Ansprüche, wobei jedem bestimmten modellierten Wert (54), jedem Ausgabewert (58), jedem gemessenen Wert (64) und jedem Korrekturwert (76) eine Varianz (56, 60, 66, 78) zugeordnet wird, wobei im Schritt a) zusätzlich eine Varianz (56) des modellierten Werts (54), im Schritt b) zusätzliche eine Varianz (66) des gemessenen Werts (64), im Schritt c) zusätzlich eine Varianz (78) des Korrekturwerts (76) und im Schritt d) zusätzlich eine Varianz (60) des Ausgabewerts (58) bestimmt wird.

6. Verfahren nach Anspruch 5, wobei im Schritt d) der modellierte Wert (54) zusätzlich in Abhängigkeit der Varianz (78) des Korrekturwerts (76) und der Varianz (56) des modellierten Werts (54) korrigiert wird.

7. Verfahren nach einem der vorhergehenden Ansprüche, wobei der Schritt c) einem Prädiktionsschritt (62) und der Schritt d) einem Korrekturschritt (52) einer Kalman-Filterung entspricht.

8. Verfahren nach einem der vorhergehenden Ansprüche, wobei vor dem erstmaligen Ausführen der aufeinanderfolgenden Schritte a) bis e) die Schritte a), d) und e) in einem Initialisierungsschritt (122) ausgeführt werden, wobei der Korrekturwert (76) in Schritt d) durch einen vordefinierten initialen Korrekturwert (80) und die Varianz (78) des Korrekturwerts (76) durch eine vordefinierte initiale Varianz (82) des initialen Korrekturwerts (80) ersetzt werden.

9. Verfahren nach einem der vorhergehenden Ansprüche, wobei im Schritt a) ein modellierter Wert (54) des Knickwinkels in Abhängigkeit von mindestens einem Geschwindigkeitswert (96) und einem Gierratenwert (98) des Nutzfahrzeugs (10), sowie wenigstens einem vorgegebenen Geometriewert (94) des Nutzfahrzeugs (10) und/oder des Fahrzeuganhängers (12) bestimmt werden.

10. Verfahren nach einem der vorhergehenden Ansprüche, wobei im Falle eines bei einer Rückwärtsfahrt (18) des Nutzfahrzeugs (10) zu bestimmenden Knickwinkels (28) die Varianz (56) des modellierten Werts (54) als unendlich groß festgelegt wird.

11. Verfahren nach einem der vorhergehenden Ansprüche, wobei der gemessene Wert (64) und der modellierte Wert (54) überwacht werden und im Falle eines konstanten gemessenen Werts (64) und eines sich ändernden modellierten Werts (54) bei mindestens zweimaligen aufeinanderfolgenden Ausführen der Schritte a) bis e) als anhängerlose Fahrt mit einem Signal (180) signalisiert wird.

12. Verfahren nach Anspruch 1, **dadurch gekennzeichnet, dass** das Nutzfahrzeug (10) eine Sattelzugmaschine (20) ist und/oder der Fahrzeuganhänger (12) ein Sattelauflieger (22) ist.

13. Vorrichtung (86) mit einem Steuergerät (88) und mit einer Sensoreinheit (34), wobei das Steuergerät (88) eingerichtet ist, das Verfahren nach einem der Ansprüche 1 bis 12 auszuführen und das Steuergerät (88) zumindest einen Dateneingang (91) aufweist, der zum Verbinden mit der Sensoreinheit (34) und zum Empfangen von Sensordaten (102) zum Bestimmen des gemessenen Werts (64) eines Knickwinkels (28) oder einer Knickwinkeländerung (32) eingerichtet ist.

**14.** Vorrichtung (86) nach Anspruch 13, wobei die Vorrichtung (86) eine Sensoreinheit (34) umfasst und die Sensoreinheit (34) eingerichtet ist, einen Knickwinkel (28) oder eine Knickwinkeländerung (32) zwischen dem Nutzfahrzeug (10) und dem Fahrzeuganhänger (12) zu bestimmen.

**15.** Vorrichtung (86) nach Anspruch 13 oder 14, wobei die Sensoreinheit (34) ein um eine Achse (43) rotierbares Rad (40) aufweist, das mit einem Abstand (36) auf der Vorderseite (38) einer Sattelkupplung (24) anbringbar ist und das Rad (40) eine Kontaktfläche (41) aufweist, die mit einem Fahrzeuganhänger (12) in Kontakt bringbar ist.

**16.** Vorrichtung (86) nach einem der Ansprüche 13 bis 15, wobei das Steuergerät (88) einen Modellbildner (104) und einen Funktionsblock (100) umfasst, wobei der Modellbildner (104) eingerichtet ist, einen modellierten Wert (54) eines Knickwinkels (28) zu bestimmen, und der Funktionsblock (100) eingerichtet ist, den modellierte Wert (54) in Abhängigkeit von Sensordaten (102) des Sensors (34), die einen gemessenen Wert (64) umfassen, zu korrigieren und den korrigierten modellierten Wert (58) als Signal (108) auszugeben.

**17.** Vorrichtung (86) nach Anspruch 13, **dadurch gekennzeichnet, dass** Steuergerät (88) ein Bremssteuergerät (88) ist.

**18.** Nutzfahrzeug (10) mit einer Vorrichtung nach einem der Ansprüche 13 bis 17.

**19.** Computerprogrammprodukt zum Ausführen eines Verfahrens nach einem der Ansprüche 1 bis 12, wenn es auf einer Vorrichtung (86) mit einem Steuergerät (88) und mit einer Sensoreinheit (34) ausgeführt wird, wobei das Steuergerät zumindest einen Dateneingang (91) aufweist, der zum Verbinden mit der Sensoreinheit (34) und zum Empfangen von Sensordaten (102) zum Bestimmen des gemessenen Werts (64) eines Knickwinkels (28) oder einer Knickwinkeländerung (32) eingerichtet ist.

## Claims

**1.** Method for a commercial vehicle (10) having a trailer coupling (14), for determining an articulation angle (28) between the commercial vehicle (10) and an attached vehicle trailer (12), comprising the steps of:

    a) determining a modeled value (54) of an articulation angle (28) or an articulation angle change (32) with a model (105),
    b) determining a measured value (64) of an articulation angle (28) or an articulation angle change (32) with a sensor unit (34),
    c) deriving a correction value (76) from the measured value (64),
    d) correcting the modeled value (54) on the basis of the correction value (76)
    e) outputting the corrected modeled value (58) as an output value (58) of an articulation angle (28) or an articulation angle change (32).

**2.** Method according to claim 1, wherein, in step a) the modeled value (54) corresponds to an absolute articulation angle (28) and, in step b), the measured value corresponds to a relative articulation angle (28).

**3.** Method according to either claim 1 or claim 2, wherein, in step c) the correction value (76) is determined on the basis of the measured value (64) and on the basis of an output value (58) output in a preceding step e).

**4.** Method according to any of the preceding claims, wherein steps a) to e) are carried out iteratively.

**5.** Method according to any of the preceding claims, wherein a variance (56, 60, 66, 78) is associated with each determined modeled value (54), each output value (58), each measured value (64) and each correction value (76), wherein in step a) additionally a variance (56) of the modeled value (54), in step b) additionally a variance (66) of the measured value (64), in step c) additionally a variance (78) of the correction value (76) and in step d) additionally a variance (60) of the output value (58) is determined.

**6.** Method according to claim 5, wherein in step d) the modeled value (54) is additionally corrected on the basis of the variance (78) of the correction value (76) and the variance (56) of the modeled value (54).

**7.** Method according to any of the preceding claims, wherein step c) corresponds to a prediction step (62) and step d) corresponds to a correction step (52) of Kalman filtering.

**8.** Method according to any of the preceding claims, wherein, before the consecutive steps a) to e) are carried out for the first time, steps a), d), and e) are carried out in an initialization step (122), wherein the correction value (76) in step d) is replaced by a predefined initial correction value (80) and the variance (78) of the correction value (76) is replaced by a predefined initial variance (82) of the initial correction value (80).

**9.** Method according to any of the preceding claims, wherein, in step a), a modeled value (54) of the articulation angle is determined on the basis of at least one speed value (96) and a yaw rate value (98) of the commercial vehicle (10), and at least one prespecified geometric value (94) of the commercial vehicle (10) and/or of the vehicle trailer (12).

**10.** Method according to any of the preceding claims, wherein, in the event of an articulation angle (28) to be determined during reversing (18) of the commercial vehicle (10), the variance (56) of the modeled value (54) is defined as infinitely large.

**11.** Method according to any of the preceding claims, wherein the measured value (64) and the modeled value (54) are monitored and, in the event of a constant measured value (64) and a changing modeled value (54), when steps a) to e) are carried out at least twice consecutively, it is signaled as a trailerless drive with a signal (180).

**12.** Method according to claim 1, **characterized in that** the commercial vehicle (10) is a truck tractor (20) and/or the vehicle trailer (12) is a semitrailer (22).

**13.** Device (86) comprising a control unit (88) and comprising a sensor unit (34), wherein the control unit (88) is configured to carry out the method according to any of claims 1 to 12, and the control unit (88) has at least one data input (91) which is configured to connect to the sensor unit (34) and to receive sensor data (102) for determining the measured value (64) of an articulation angle (28) or an articulation angle change (32).

**14.** Device (86) according to claim 13, wherein the device (86) comprises a sensor unit (34) and the sensor unit (34) is configured to determine an articulation angle (28) or an articulation angle change (32) between the commercial vehicle (10) and the vehicle trailer (12).

**15.** Device (86) according to either claim 13 or claim 14, wherein the sensor unit (34) has a wheel (40) which can be rotated about a shaft (43) and can be attached to the front side (38) of a semitrailer coupling (24) at a distance (36), and the wheel (40) has a contact surface (41) which can be brought into contact with a vehicle trailer (12).

**16.** Device (86) according to any of claims 13 to 15, wherein the control unit (88) comprises a model former (104) and a functional block (100), wherein the model former (104) is configured to determine a modeled value (54) of an articulation angle (28), and the functional block (100) is configured to correct the modeled value (54) on the basis of sensor data (102) of the sensor (34) which comprise a measured value (64) and to output the corrected modeled value (58) as a signal (108).

**17.** Device (86) according to claim 13, **characterized in that** the control unit (88) is a brake control unit (88).

**18.** Commercial vehicle (10) comprising a device according to any of claims 13 to 17.

**19.** Computer program product for carrying out a method according to any of claims 1 to 12, when it is carried out on a device (86) comprising a control unit (88) and comprising a sensor unit (34), wherein the control unit has at least one data input (91) which is configured to connect to the sensor unit (34) and to receive sensor data (102) for determining the measured value (64) of an articulation angle (28) or an articulation angle change (32).

**Revendications**

**1.** Procédé destiné à un véhicule utilitaire (10) présentant un attelage de remorque (14), pour déterminer un angle d'articulation (28) entre le véhicule utilitaire (10) et une remorque de véhicule (12) attelée, comprenant les étapes de

    a) détermination d'une valeur modélisée (54) d'un angle d'articulation (28) ou d'une variation d'angle d'articulation (32) à l'aide d'un modèle (105),
    b) détermination d'une valeur mesurée (64) d'un angle d'articulation (28) ou d'une variation d'angle d'articulation (32) à l'aide d'une unité de capteur (34),
    c) dérivation d'une valeur de correction (76) à partir de la valeur mesurée (64),
    d) correction de la valeur modélisée (54) en fonction de la valeur de correction (76)
    e) affichage de la valeur modélisée corrigée (58) comme valeur de sortie (58) d'un angle d'articulation (28) ou d'une variation d'angle d'articulation (32).

**2.** Procédé selon la revendication 1, dans lequel, à l'étape a), la valeur modélisée (54) correspond à un angle d'articulation absolu (28) et à l'étape b), la valeur mesurée correspond à un angle d'articulation relatif (28).

**3.** Procédé selon la revendication 1 ou 2, dans lequel, à l'étape c), la valeur de correction (76) est déterminée en fonction de la valeur mesurée (64) et en fonction d'une valeur de sortie (58) affichée à une étape e) précédente.

**4.** Procédé selon l'une des revendications précédentes, dans lequel les étapes a) à e) sont exécutées de façon itérative.

**5.** Procédé selon l'une des revendications précédentes, dans lequel une variance (56, 60, 66, 78) est attribuée à chaque valeur modélisée (54) déterminée, à chaque valeur de sortie (58), à chaque valeur mesurée (64) et à chaque valeur de correction (76), dans lequel une variance (56) de la valeur modélisée (54) est en outre déterminée à l'étape a), une variance (66) de la valeur mesurée (64) est en outre déterminée à l'étape b), une variance (78) de la valeur de correction (76) est en outre déterminée à l'étape c) et une variance (60) de la valeur de sortie (58) est en outre déterminée à l'étape d).

**6.** Procédé selon la revendication 5, dans lequel, à l'étape d), la valeur modélisée (54) est en outre corrigée en fonction de la variance (78) de la valeur de correction (76) et de la variance (56) de la valeur modélisée (54).

**7.** Procédé selon l'une des revendications précédentes, dans lequel l'étape c) correspond à une étape de prédiction (62) et l'étape d) correspond à une étape de correction (52) d'un filtrage de Kalman.

**8.** Procédé selon l'une des revendications précédentes, dans lequel, avant la première exécution des étapes consécutives a) à e), les étapes a), d) et e) sont exécutées lors d'une étape d'initialisation (122), dans lequel la valeur de correction (76) à l'étape d) est remplacée par une valeur de correction initiale prédéfinie (80) et la variance (78) de la valeur de correction (76) est remplacée par une variance initiale prédéfinie (82) de la valeur de correction initiale (80).

**9.** Procédé selon l'une des revendications précédentes, dans lequel, à l'étape a), une valeur modélisée (54) de l'angle d'articulation est déterminée en fonction d'au moins une valeur de vitesse (96) et une valeur d'angle de lacet (98) du véhicule utilitaire (10), ainsi que d'au moins une valeur de géométrie (94) prédéterminée du véhicule utilitaire (10) et/ou de la remorque de véhicule (12).

**10.** Procédé selon l'une des revendications précédentes, dans lequel, dans le cas d'un angle d'articulation (28) à déterminer lors d'une marche arrière (18) du véhicule utilitaire (10), la variance (56) de la valeur modélisée (54) est définie comme infiniment grande.

**11.** Procédé selon l'une des revendications précédentes, dans lequel la valeur mesurée (64) et la valeur modélisée (54) sont surveillées et, dans le cas d'une valeur mesurée (64) constante et d'une valeur modélisée (54) variable lors d'au moins la deuxième exécution consécutive des étapes a) à e), une signalisation est effectuée par un signal (180) comme trajet sans remorque.

**12.** Procédé selon la revendication 1, **caractérisé en ce que** le véhicule utilitaire (10) est un tracteur routier (20) et/ou la remorque de véhicule (12) est une semi-remorque (22).

**13.** Dispositif (86) comportant un appareil de commande (88) et comportant une unité de capteur (34), dans lequel l'appareil de commande (88) est conçu pour exécuter le procédé selon l'une des revendications 1 à 12 et l'appareil de commande (88) présente au moins une entrée de données (91) conçue pour être reliée à l'unité de capteur (34) et pour recevoir des données de capteur (102) permettant de déterminer la valeur mesurée (64) d'un angle d'articulation (28) ou d'une variation d'angle d'articulation (32).

**14.** Dispositif (86) selon la revendication 13, dans lequel le dispositif (86) comprend une unité de capteur (34), et l'unité de capteur (34) est conçue pour déterminer un angle d'articulation (28) ou une variation d'angle d'articulation (32) entre le véhicule utilitaire (10) et la remorque de véhicule (12).

**15.** Dispositif (86) selon la revendication 13 ou 14, dans lequel l'unité de capteur (34) présente une roue (40) tournant autour d'un axe (43), laquelle peut être montée à une distance (36) à l'avant (38) d'une sellette d'attelage (24) et la roue (40) présente une surface de contact (41) qui peut être amenée en contact avec une remorque de véhicule (12).

**16.** Dispositif (86) selon l'une des revendications 13 à 15, dans lequel l'appareil de commande (88) comprend un modélisateur (104) et un bloc fonctionnel (100), dans lequel le modélisateur (104) est conçu pour déterminer une valeur modélisée (54) d'un angle d'articulation (28), et le bloc fonctionnel (100) est conçu pour corriger la valeur modélisée (54) en fonction de données de capteur (102) du capteur (34), qui comprennent une valeur mesurée (64) et pour afficher la valeur modélisée corrigée (58) comme signal (108).

**17.** Dispositif (86) selon la revendication 13, **caractérisé en ce que** l'appareil de commande (88) est un appareil de commande de freins (88).

**18.** Véhicule utilitaire (10) comportant un dispositif selon l'une des revendications 13 à 17.

**19.** Produit de programme informatique permettant de mettre en oeuvre un procédé selon l'une des revendications 1 à 12 lorsqu'il est exécuté sur un dispositif (86) comportant un appareil de commande (88) et une unité de capteur (34), dans lequel l'appareil de commande présente au moins une entrée de données (91) conçue pour être reliée à l'unité de capteur (34) et pour recevoir des données de capteur (102) permettant de déterminer la valeur mesurée (64) d'un angle d'articulation (28) ou d'une variation d'angle d'articulation (32).

Fig. 1

Fig. 2

Fig. 3

Fig. 4

Fig. 5

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012018914 A1